# EUROPEAN PATENT SPECIFICATION

(11) **EP 0 955 254 B1**
(45) Date of publication and mention of the grant of the patent: **12.03.2003**
(21) Application number: 99201376.3
(22) Date of filing: 29.04.1999
(51) Int. Cl.: B65G 63/00

(54) **Safety device for a free standing container**
Sicherheitsvorrichtung für Wechselbehälter
Dispositif de sécurité pour conteneur interchangeable

(30) Priority: 03.05.1998 NL 1009053
(43) Date of publication of application: 10.11.1999
(73) Proprietor: GS-Holding B.V., 7414 GR Deventer (NL)
(72) Inventor: Simon, Gyula, 7414 GR Deventer (NL)
(74) Representative: Dokter, Hendrik Daniel

(56) References cited:
- CH-A- 383 789
- GB-A- 2 223 220
- US-A- 4 624 446

## Description

The invention relates to a device for securing a free-standing container which is placed at a loading platform, provided with support legs and rests on the road surface with these support legs. Free-standing containers are for instance known from the standard EN 284 from the European Committee for Standardization (CEN).

When a free-standing container is used in goods transport, a container loaded with goods is taken to the place of destination by a truck which parks the free-standing container against a loading platform. The support legs of the free-standing container are then folded out and the truck can drive away from under the container. The parked free-standing container is usually unloaded using a fork-lift truck and subsequently loaded with other goods. An important advantage of goods transport using free-standing containers is the cost-saving resulting from the truck being immediately available after the free-standing container has been parked.

A serious drawback of the use of free-standing containers is the danger of accidents during loading and unloading.

The driving in and out of the fork-lift truck with load creates a dynamic forward and rearward movement which can result in collapsing of the support legs of the free-standing container, which have a relatively light construction. The age and condition of the free-standing container and the associated support legs herein form an important aspect. There is also the danger during loading of an empty free-standing container with a heavy fork-lift truck that the side of the free-standing container remote from the platform (the front side) will sink downward under the weight of the load stacked there, since the support legs are not placed at the corner points but at a distance of about 1.5-2 m from the front side, while efficient utilization of the container volume does of course require that loading of the container is started right at the front. There is the further risk of the support legs sinking into the road surface, particularly in a road surface of asphalt or asphalt concrete, which can become very soft during warm summer days.

GB 2 223 220 A discloses a device for lifting and removing a superstructure from a chassis of a vehicle. The device comprises two spaced apart pairs of rails, between which a vehicle is to be reversed. Each pair of said rails has a fixed ground rail connected to a movable lifting rail through a pair of movable arms. A pair of said arms is lockable in their end position through a safety bracket/safety pin arrangement. On reversing the vehicle between said pair of rails, the rear wheels of the vehicle ascend a pair of ramp portions which were raised at an angle to a floor unit, until rear support bars on the superstructure engage fixed stops on the top of the movable lifting rails, causing said rails to lift, taking over the wheigt of the superstructure from the chassis on the lifting rails.

The device disclosed relates to superstuctures of commercial vehicles, and include skips, box-vans, materail spreader bodies, turntable ladders. These superstructures are not provided with support legs, and require to be modified by providing it with (insertable or withdrawable) support bars.

The object of the invention is to provide a device using which the danger of accidents during loading and unloading of a free-standing container is obviated, or at least reduced to a considerable degree. Such a device must not form an obstacle for a truck which sets down or picks up a free-standing container and must be easy to operate and be purchasable and maintainable at low cost.

These objectives are realized and other advantages obtained with a device of the type stated in the preamble which comprises according to the invention a lockable carriage guided along the road surface in longitudinal direction of a free-standing container placed at the loading platform, which carriage is displaceable between a rest position in which the free-standing container is not secured and an operative position in which the free-standing container is secured, and a securing arm which is coupled to the carriage and which in said rest position extends substantially horizontally along or in the road surface and in said operative position extends between a pivot point close to or in the road surface, and a suitable support surface on the free-standing container, wherein the securing arm secures the free-standing container against a displacement in longitudinal direction away from the loading platform.

In an embodiment the support surface is provided on the underside of the bottom of the free-standing container and the securing arm is pivotally connected to the carriage such that in said operative position the securing arm encloses on its side directed toward the loading platform an acute angle with its projection onto the road surface.

In this embodiment the securing arm is preferably pivotally coupled at its end remote from the carriage to a lever element which is provided with a blocking element and which in said rest position substantially extends along the securing arm and in said operative position substantially extends along the bottom of the free-standing container, wherein the blocking element co-acts with a component of the container bottom suitable for this purpose, for instance with a transverse beam.

In a simple embodiment the support surface is provided on the underside of the bottom of the free-standing container and the securing arm is pivotally connected to a bracing arm which is pivotally connected to the carriage such that in said operative position the securing arm encloses on its side directed toward the loading platform an obtuse angle with the extension of its projection onto the road surface.

In this simple embodiment the securing arm is for instance coupled on its end remote from the carriage by means of a transverse arm to two second securing arms placed on either side in transverse direction relative to the first securing arm such that in said operative position each of the securing arms encloses on its side directed toward the loading platform an obtuse angle with the extension of its projection onto the road surface. The two (outer) securing arms and the connecting transverse arm form in said operative position a reverse U-construction, the legs of which incline slightly rearward relative to the loading platform and the connecting transverse arm presses against the underside of the bottom of the free-standing container.

In yet another embodiment the support surface is provided on the outside of the short wall of the free-standing container remote from the loading platform and the securing arm is pivotally connected on one of its ends to the carriage and this securing arm is pivotally connected between its outer ends to a bracing arm which is connectable to the carriage and which in said rest position extends substantially horizontally along or in the road surface and in said operative position extends between a pivot point close to or in the road surface and the securing arm, such that in said operative position the securing arm rests against the support surface with a part of its side directed toward the loading platform.

A safety device according to this embodiment provides an extremely reliable blocking of a parked free-standing container against a displacement in longitudinal direction away from the loading platform.

The securing arm and the bracing arm can for instance be coupled by a connecting element extending between these arms.

In a very advantageous embodiment the securing arm is vertical in said operative position and comprises a lifting element which is displaceable and lockable therealong by the bracing arm and which in said operative position presses against the underside of the free-standing container and is locked, wherein the securing arm also secures the free-standing container against displacement in downward direction.

In a device according to this latter embodiment the carriage is displaceable in advantageous manner using drive means which are coupled to the bracing arm in a manner such that the pivot point of the bracing arm close to or in the road surface in said rest position is displaceable by the drive means in the direction of the carriage to a position wherein the securing arm has obtained the orientation to be taken up in the operative position and said pivot point and the carriage can then be displaced together to a position in which the carriage is in said operative position.

The invention will be elucidated hereinbelow on the basis of embodiments with reference to the annexed drawings.

In the drawings
Fig. 1 shows a side view of a free-standing container parked at a loading platform and secured by two devices according to a first embodiment of the invention,
Fig. 2 is a detail of the safety devices of fig. 1,
Fig. 3 is a front view of the secured free-standing container of fig. 1
Fig. 4 shows a side view of a free-standing container parked at a loading platform and secured by two devices according to a second embodiment of the invention,
Fig. 5 shows a front view of the secured free-standing container of fig. 4,
Fig. 6 shows a side view of a free-standing container parked at a loading platform and secured by a device according to a third embodiment of the invention,
Fig. 7 is a top view of the safety device of fig. 6 in rest position,
Fig. 8 is a side view of the safety device of fig. 6 in rest position,
Fig. 9 shows a side view of the safety device of fig. 6 in a first position between rest position and operative position,
Fig. 10 is a side view of the safety device of fig. 6 in a subsequent position between rest position and operative position, and
Fig. 11 is a front view of the safety device of fig. 6 in rest position.

Corresponding components are designated in the figures by the same reference numerals.

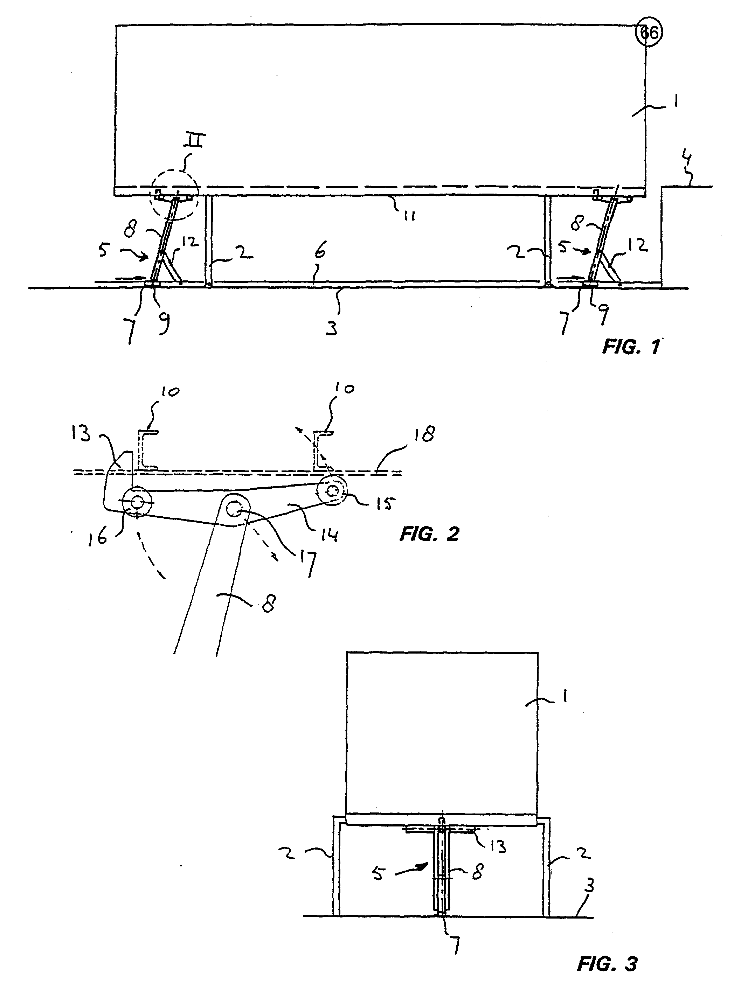

Fig. 1 shows a free-standing container 1 which is parked on support legs 2 on a road surface 3 opposite a loading platform 4 and is secured by safety devices 5, each comprising a carriage 7 which is guided along rails 6 and to which a securing arm 8 is coupled at its one end by means of a hinge 9. Securing arms 8 are each provided on their outer end with a blocking arm 14 (shown in detail in fig. 2) and are pivotally connected to a bracing arm 12 which is in turn pivotally coupled to a locking element (not shown) extending from carriage 7. Securing arms 8 are directed rearward at an angle towards loading platform 4 and thus enclose an acute angle with their projection onto road surface 3.

Fig. 2 is an enlargement of detail II of fig. 1 and shows the bottom of free-standing container 1 with longitudinal beam 18 and transverse beam 10 and the end of securing arm 8 remote from carriage 7, on which arm a blocking arm 14 provided with a contact roller 15, a guide roller 16 and a blocking hook 13 is pivotally mounted on a pivot shaft 17.

Fig. 3 shows free-standing container 1 of fig. 1 in front view.

Securing arm 8, bracing arm 12 and blocking arm 14 of the safety system shown in figures 1-3 lie in rest position virtually horizontally on road surface 3 so that a trailer with free-standing container can easily drive over it in order to park the container. Once the free-standing container is parked the respective carriages 7 are pulled along rails 6 by means of a per se known drive (for instance chains or screw spindles) in the direction of loading platform 4, wherein bracing arms 12 push securing arms 8 upward until contact roller 15 and then guide roller 16 are pressed against the longitudinal beam 18 of free-standing container 1 and bracing arm 12 is locked relative to carriage 7, whereafter carriage 7 is guided further to loading platform 4 until the respective blocking hooks 13 press against the respective transverse beams 10 and thus block free-standing container 1 against movement in longitudinal direction away from loading platform 4. The arrows in fig. 2 show the movement of blocking arm 14 and securing arm 8 when the safety is released.

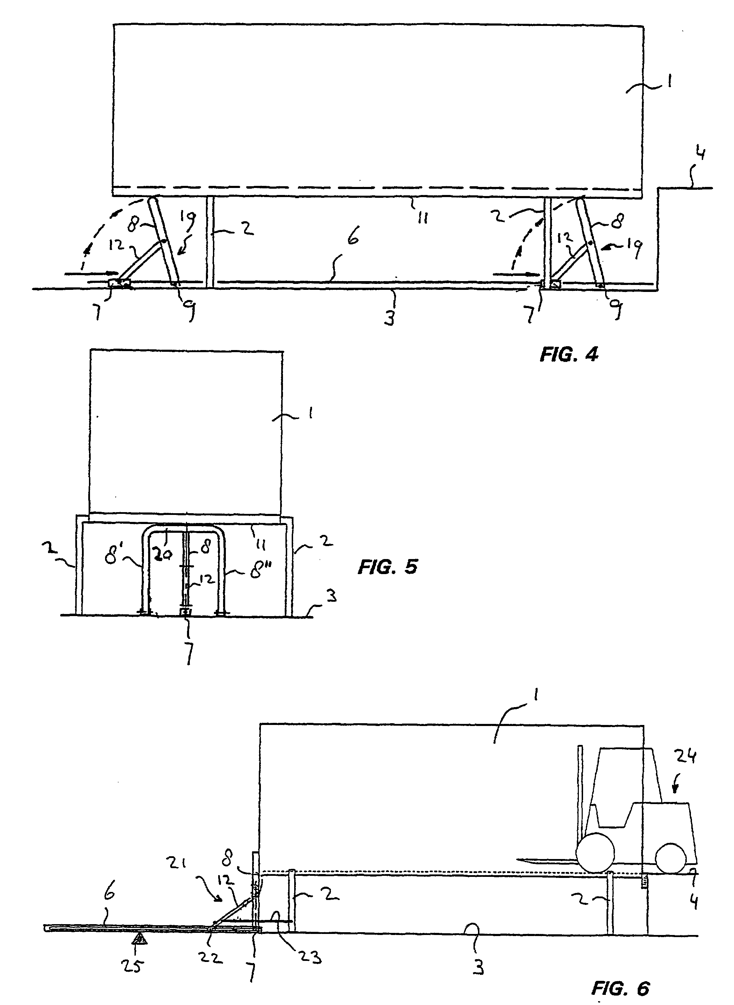

Fig. 4 shows a free-standing container 1 which is secured by safety devices 19, a securing arm 8 of which is pivotally connected to a bracing arm 12 which is pivotally connected to carriage 7 such that in said operative position securing arm 8 encloses on its side directed toward loading platform 4 an obtuse angle with the extension of its projection onto road surface 3.

Fig. 5 shows how each securing arm 8 is coupled on its end remote from carriage 7 by a transverse arm 20 to two second securing arms 8', 8" placed on either side in transverse direction relative to the transverse arm such that in said operative position each of the securing arms 8, 8', 8" encloses on its side directed toward loading platform 4 an obtuse angle with the extension of its projection onto road surface 3, wherein transverse arm 20 presses against the underside 11 of the bottom of free-standing container 1 and thus secures the container.

Fig. 6 shows a free-standing container 1 which is secured by a safety device 21, the securing arm 8 of which is pivotally connected at one of its ends to carriage 7 and pivotally connected between its ends to a bracing arm 12 which can be coupled to carriage 7. In the rest position bracing arm 12 extends virtually horizontally along or in road surface 3 and in the operative position shown in the figure extends between a pivot point 22 situated at the level of road surface 3 and the securing arm 8 such that in the operative position securing arm 8 rests with a part of its side directed toward loading platform 4 against a support surface on the front side of free-standing container 1, wherein securing arm 8 and bracing arm 12 are mutually locked using a gear rack 23. Drawn by way of illustration is a fork-lift truck 24 which drives from loading platform 4 into container 1 at the rear. The position of carriage 7 in the rest position is indicated with triangle 25.

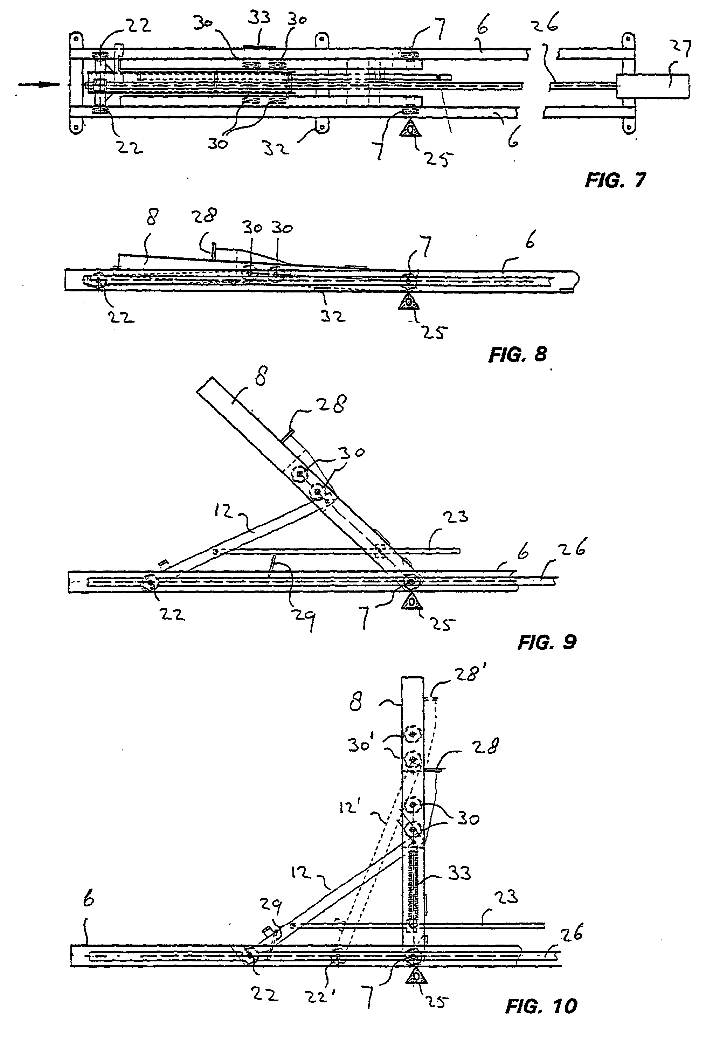

Figures 7 and 8 show the safety device of fig. 6 in rest position, indicated by triangle 25 at the location of the wheels of carriage 7. The device is displaceable by means of a screw spindle 26 which is driven by a motor 27 along rails 6 resting on sleepers 32.

Figures 9 and 10 show the securing device of fig. 6 in successive positions out of the rest position, wherein the shaft which provides the pivot point 22 for bracing arm 12, with wheels on its ends, is pulled by screw spindle 26 in the direction of carriage 7, wherein securing arm 8 and a lifting element 28 which is displaceable and lockable along this securing arm by bracing arm 12 are pressed upward until they reach a vertical position (fig. 10). As long as securing arm 8 is not yet in vertical position, carriage 7 is locked against displacement along rails 6. The moment securing arm 8 has reached the vertical position bracing arm 12 releases carriage 7 by operation of a ratchet 29 and the whole device is pulled in the direction of the parked container (to the right in the figure). When contact is made between securing arm 8 and the front side of the container the lifting element 28, which can travel in securing arm 8 using wheels 30, is pressed upward by bracing arm 12 until lifting element 28 butts against the underside of the container in the position 28' drawn in dotted lines, whereafter the bracing arm is locked to securing arm 8 in the position 12' drawn in dotted lines using a gear rack 23, whereby lifting element 28' is also locked and the container is secured against displacement in both forward and downward direction, The figure further shows a spring 33 for driving the lifting element back from position 28' to position 28 along securing arm 8 after release.

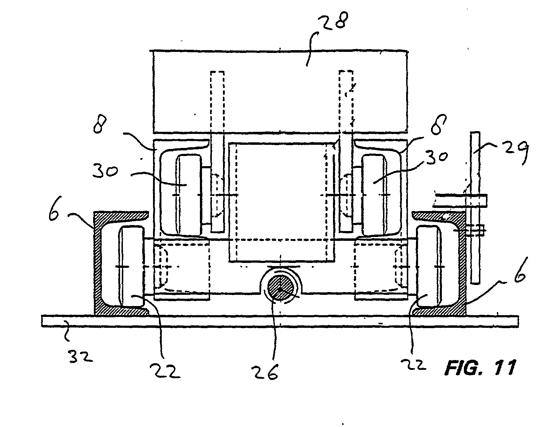

Fig. 11 shows a front view as according to the arrow in fig. 7 of the safety device in the rest position.

## Claims

1. Device (5, 19, 21) for securing a free-standing container (1) which is placed at a loading platform (4), provided with support legs (2) and rests on the road surface (3) with these support legs (2), comprising
a lockable carriage (7) guided along the road surface (3) in longitudinal direction of a free-standing container (1) placed at the loading platform (4), which carriage is displaceable between a rest position in which the free-standing container (1) is not secured and an operative position in which the free-standing container (1) is secured, and
a securing arm (8) which is coupled to the carriage (7) and which in said rest position extends horizontally along or in the road surface (3) and in said operative position extends between a pivot point (9) close to or in the road surface (3), and a suitable support surface (10, 18) on the free-standing container (1), wherein the securing arm (8) secures the free-standing container (1) against a displacement in longitudinal direction away from the loading platform (4).

2. Device (5) as claimed in claim 1 for securing a free-standing container (1) having the support surface (10) provided on the underside of its bottom (11), **characterized in that** the securing arm (8) is pivotally connected to the carriage (7) such that in said operative position the securing arm (8) encloses on its side directed toward the loading platform (4) an acute angle with its projection onto the road surface (3).

3. Device (5) as claimed in claim 2, **characterized in that** the securing arm (8) is pivotally coupled at its end remote from the carriage (7) to a lever element (14) which is provided with a blocking element (13) and which in said rest position extends along the securing arm (8) and in said operative position extends along the bottom (11) of the free-standing container (1), wherein the blocking element (13) co-acts with a component (10) of the container bottom (11) suitable for this purpose.

4. Device (19) as claimed in claim 1 for securing a free-standing container (1) having the support surface (10) provided on the underside of its bottom (11), **characterized in that** the securing arm (8) is pivotally connected to a bracing arm (12) which is pivotally connected to the carriage (7) such that in said operative position the securing arm (8) encloses on its side directed toward the loading platform (4) an obtuse angle with the extension of its projection onto the road surface (3).

5. Device (19) as claimed in claim 4, **characterized in that** the securing arm (8) is coupled on its end remote from the carriage (7) by a transverse arm (20) to the corresponding end of two second securing arms (8', 8") placed on either side in transverse direction relative to the first securing arm (8) such that in said operative position each of the securing arms (8, 8', 8") encloses on its side directed toward the loading platform an obtuse angle with the extension of its projection onto the road surface (3).

6. Device (21) as claimed in claim 1 for securing a free-standing container (1) having the support surface (10) provided on the outside of its short wall remote from the loading platform (4), **characterized in that** the securing arm (8) is pivotally connected on one of its ends to the carriage (7) and is pivotally connected between its outer ends to a bracing arm (12) which is connectable to the carriage (7) and which in said rest position extends horizontally along or in the road surface (3) and in said operative position extends between a pivot point (22) close to or in the road surface (3) and the securing arm (8), such that in said operative position the securing arm (8) rests against the support surface with a part of its side directed toward the loading platform (4).

7. Device (21) as claimed in claim 6, **characterized in that** the securing arm (8) and the bracing arm (12) can be coupled by a connecting element (23) extending between these arms (8, 12).

8. Device (21) as claimed in claim 6 or 7, **characterized in that** the securing arm (8) is vertical in said operative position and comprises a lifting element (28) which is displaceable and lockable along this securing arm (8) by the bracing arm (12) and which in said operative position presses and is locked against the underside (11) of the free-standing container (1), wherein the securing arm (8) also secures the free-standing container (1) against displacement in downward direction.

9. Device (21) as claimed in any of the claims 6-8, **characterized in that** the carriage (7) is displaceable using drive means (26, 27) which are coupled to the bracing arm (12) in a manner such that the pivot point (22) of the bracing arm (12) close to or in the road surface (3) in said rest position is displaceable by the drive means (26, 27) in the direction of the carriage (7) to a position wherein the securing arm (8) has obtained the orientation to be taken up in the operative position and said pivot point (22) and the carriage (7) can then be displaced together to a position in which the carriage (7) is in said operative position.

## Patentansprüche

1. Vorrichtung (5, 19, 21) zur Sicherung eines an eine Laderampe (4) gestellten, mit Stützbeinen (2) versehenen und mit diesen Stützbeinen (2) auf der Fahrbahn (3) ruhenden Wechselbehälters (1), und diese Vorrichtung umfasst
einen entlang der Fahrbahn (3) in Längsrichtung eines an die Laderampe (4) gestellten Wechselbehälters (1) geführten, abschließbaren Wagen (7), der zwischen einer Ruhestellung, in der der Wechselbehälter (1) nicht gesichert ist, und einer Betriebsstellung, in der der Wechselbehälter (1) gesichert ist, verstellbar ist, und
einen Sicherungsarm (8), der an den Wagen (7) gekoppelt ist und der sich in besagter Ruhestellung waagerecht entlang oder in der Fahrbahn (3) ausstreckt und sich in besagter Betriebsstellung zwischen einem Drehpunkt (9) nahe oder in der Fahrbahn (3) und einer geeigneten Auflagefläche (10, 18) auf dem Wechselbehälter (1) ausstreckt, wobei der Sicherungsarm (8) den Wechselbehälter (1) gegen eine Fortbewegung in Längsrichtung von der Laderampe (4) weg sichert.

2. Vorrichtung (5) nach Anspruch 1 zur Sicherung eines Wechselbehälters (1), bei dem sich die Auflagefläche (10) an der Unterseite seines Bodens (11) befindet, **dadurch gekennzeichnet, dass** der Sicherungsarm (8) drehbar mit dem Wagen (7) auf solche Weise verbunden ist, dass der Sicherungsarm (8) in besagter Betriebsstellung an seiner zur Laderampe (4) gerichteten Seite mit seiner Projektion auf die Fahrbahn einen spitzen Winkel einschließt.

3. Vorrichtung (5) nach Anspruch 2, **dadurch gekennzeichnet, dass** der Sicherungsarm (8) an seinem vom Wagen (7) abgewendeten Ende drehbar mit einem Hebelelement (14) gekoppelt ist, das mit einem Blockierungselement (13) versehen ist und das sich in besagter Ruhestellung entlang dem Sicherungsarm (8) ausstreckt und sich in besagter Betriebsstellung entlang dem Boden (11) des Wechselbehälters (1) ausstreckt, wobei das Blockierungselement (13) mit einer für diesen Zweck geeigneten Komponente (10) des Bodens (11) des Wechselbehälters zusammenarbeitet.

4. Vorrichtung (19) nach Anspruch 1 zur Sicherung eines Wechselbehälters (1), bei dem sich die Auflagefläche (10) an der Unterseite seines Bodens (11) befindet, **dadurch gekennzeichnet, dass** der Sicherungsarm (8) drehbar mit einem Strebearm (12) verbunden ist, der drehbar mit dem Wagen (7) auf solche Weise verbunden ist, dass der Sicherungsarm (8) in besagter Betriebsstellung an seiner zur Laderampe (4) gerichteten Seite mit der Verlängerung seiner Projektion auf die Fahrbahn einen stumpfen Winkel einschließt.

5. Vorrichtung (19) nach Anspruch 4, **dadurch gekennzeichnet, dass** der Sicherungsarm (8) an seinem vom Wagen (7) abgewendeten Ende durch einen Querarm (20) mit dem entsprechenden Ende von zwei in Querrichtung zum ersten Sicherungsarm (8) an jeder Seite angebrachten zweiten Sicherungsarmen (8', 8") auf solche Weise gekoppelt ist, dass in besagter Betriebsstellung jeder der Sicherungsarme (8, 8', 8'') an seiner zur Laderampe (4) gerichteten Seite mit der Verlängerung seiner Projektion auf die Fahrbahn einen stumpfen Winkel einschließt.

6. Vorrichtung (21) nach Anspruch 1 zur Sicherung eines Wechselbehälters (1), bei dem sich die Auflagefläche (10) an der Außenseite seiner von der Laderampe (4) abgewendeten kurzen Wand befindet, **dadurch gekennzeichnet, dass** der Sicherungsarm (8) an einem seiner Enden drehbar mit dem Wagen (7) verbunden ist und zwischen seinen äußeren Enden drehbar mit einem Strebearm (12) verbunden ist, der sich mit dem Wagen (7) verbinden lässt und der sich in besagter Ruhestellung waagerecht entlang oder in der Fahrbahn (3) ausstreckt und sich in besagter Betriebsstellung zwischen einem Drehpunkt (22) nahe oder in der Fahrbahn (3) und dem Sicherungsarm (8) ausstreckt, so dass der Sicherungsarm (8) in besagter Betriebsstellung mit einem Teil seiner zur Laderampe (4) gerichteten Seite gegen die Auflagefläche lehnt.

7. Vorrichtung (21) nach Anspruch 6, **dadurch gekennzeichnet, dass** der Sicherungsarm (8) und der Strebearm (12) durch ein sich zwischen diesen Armen (8, 12) ausstreckendes Verbindungselement (23) gekoppelt werden können.

8. Vorrichtung (21) nach Anspruch 6 oder 7, **dadurch gekennzeichnet, dass** der Sicherungsarm (8) in besagter Betriebsstellung senkrecht steht und ein entlang diesem Sicherungsarm (8) durch den Strebearm (12) verstellbares und zu verriegelndes Hubelement (28) umfasst, das in besagter Betriebsstellung gegen die Unterseite (11) des Wechselbehälters (1) drückt und verriegelt ist, wobei der Sicherungsarm (8) den Wechselbehälter (1) auch gegen eine abwärts gerichtete Fortbewegung sichert.

9. Vorrichtung (21) nach einem der Ansprüche 6-8, **dadurch gekennzeichnet, dass** der Wagen (7) mit Hilfe von Antriebsmitteln (26, 27) verstellbar ist, die an den Strebearm (12) auf solche Weise gekoppelt sind, dass der Drehpunkt (22) des Strebearms (12) nahe oder in der Fahrbahn (3) in besagter Ruhestellung durch die Antriebsmittel (26, 27) in Richtung des Wagens (7) bis zu einer Stellung verstellt werden kann, in der der Sicherungsarm (8) die in der Betriebsstellung einzunehmende Ausrichtung erreicht hat, und der besagte Drehpunkt (22) und der Wagen (7) dann zusammen bis zu einer Stellung verstellt werden können, in der sich der Wagen (7) in besagter Betriebsstellung befindet.

## Revendications

1. Dispositif (5, 19, 21) pour fixer un conteneur interchangeable (1) qui est placé sur un quai de chargement (4), pourvu de pieds de support (2) et reposant sur la surface de la route (3) avec ces pieds de support (2), comprenant
un chariot verrouillable (7) guidé le long de la surface de la route (3) dans la direction longitudinale d'un conteneur interchangeable (1) placé sur le quai de chargement (4), ledit chariot pouvant être déplacé entre une position de repos dans laquelle le conteneur interchangeable (1) n'est pas fixé et une position opérationnelle dans laquelle le conteneur interchangeable (1) est fixé, et
un bras de fixation (8) qui est couplé au chariot (7) et qui, dans ladite position de repos, s'étend horizontalement le long de ou sur la surface de la route (3), et qui, dans ladite position opérationnelle, s'étend entre un point de pivot (9) proche de ou sur la surface de la route (3), et une surface de support appropriée (10, 18) sur le conteneur interchangeable (1), dans lequel le bras de fixation (8) bloque le conteneur interchangeable (1) contre un déplacement dans la direction longitudinal l'éloignant du quai de chargement (4).

2. Dispositif (5) suivant la revendication 1 pour fixer un conteneur interchangeable (1), dont la surface de support (10) est prévue sur la face inférieure de son fond (11), **caractérisé en ce que** le bras de fixation (8) est connecté d'une façon pivotante au chariot (7) de telle sorte que, dans ladite position opérationnelle, le bras de fixation (8) forme sur sa face orientée en direction du quai de chargement (4) un angle aigu avec sa projection sur la surface de la route (3).

3. Dispositif (5) suivant la revendication 2, **caractérisé en ce que** le bras de fixation (8) est couplé d'une façon pivotante à son extrémité éloignée du chariot (7) à un élément de levier (14) qui est pourvu d'un élément de blocage (13) et qui, dans ladite position de repos, s'étend le long du bras de fixation (8), et qui, dans ladite position opérationnelle, s'étend le long du fond (11) du conteneur interchangeable (1), dans lequel l'élément de blocage (13) co-agit avec un composant (10) du fond (11) du conteneur approprié à cette fin.

4. Dispositif (19) suivant la revendication 1 pour fixer un conteneur interchangeable (1), dont la surface de support (10) est prévue sur la face inférieure du fond (11), **caractérisé en ce que** le bras de fixation (8) est connecté d'une façon pivotante à un bras de renforcement (12) qui est connecté d'une façon pivotante au chariot (7), de telle sorte que, dans ladite position opérationnelle, le bras de fixation (8) forme sur sa face orientée en direction du quai de chargement (4), un angle obtus avec l'extension de sa projection sur la surface de la route (3).

5. Dispositif (19) suivant la revendication 4, **caractérisé en ce que** le bras de fixation (8) est couplé à son extrémité éloignée du chariot (7) par un bras transversal (20) à l'extrémité correspondante de deux seconds bras de fixation (8', 8") placés de part et d'autre dans la direction transversale par rapport au premier bras de fixation (8), de telle sorte que, dans ladite position opérationnelle, chacun des bras de fixation (8, 8', 8") forme sur sa face orientée en direction du quai de chargement un angle obtus avec l'extension de sa projection sur la surface de la route (3).

6. Dispositif (21) suivant la revendication 1 pour fixer un conteneur interchangeable (1), dont la surface de support (10) est prévue sur la surface extérieure de sa paroi courte éloignée du quai de chargement (4), **caractérisé en ce que** le bras de fixation (8) est connecté d'une façon pivotante à l'une de ses extrémités au chariot (7), et est connecté d'une façon pivotante entre ses extrémités extérieures à un bras de renforcement (12) qui peut être connecté au chariot (7) et qui, dans ladite position de repos, s'étend horizontalement le long de ou sur la surface de la route (3) et qui, dans ladite position opérationnelle, s'étend entre un point de pivot (22) proche de ou sur la surface de route (3) et le bras de fixation (8), de telle sorte que, dans ladite position opérationnelle, le bras de fixation (8) repose contre la surface de support avec une partie de sa face orientée en direction du quai de chargement (4).

7. Dispositif (21) suivant la revendication 6, **caractérisé en ce que** le bras de fixation (8) et le bras de renforcement (12) peuvent être couplés par un élément de connexion (23) s'étendant entre ces bras (8, 12).

8. Dispositif (21) suivant la revendication 6 ou 7, **caractérisé en ce que** le bras de fixation (8) est vertical dans ladite position opérationnelle et comprend un élément de levage (23) qui peut être déplacé et verrouillé le long de ce bras de fixation (8) par le bras de renforcement (12) et qui, dans ladite position opérationnelle, presse et est verrouillé contre la face inférieure (11) du conteneur interchangeable (1), dans lequel le bras de fixation (8) bloque aussi le conteneur interchangeable (1) contre un déplacement dans la direction vers le bas.

9. Dispositif (21) suivant l'une quelconque des revendications 6 à 8, **caractérisé en ce que** le chariot (7) peut être déplacé à l'aide de moyens d'entraînement (26, 27) qui sont couplés au bras de renforcement (12) d'une manière telle que le point de pivot (22) du bras de renforcement (12) proche de ou sur la surface de la route (3) dans ladite position de repos puisse être déplacé par les moyens d'entraînement (26, 27) dans la direction du chariot (7) jusqu'à une position dans laquelle le bras de fixation (8) a atteint l'orientation qu'il doit prendre dans la position opérationnelle, et que ledit point de pivot (22) et le chariot (7) puissent ensuite être déplacés de concert jusqu'à une position dans laquelle le chariot (7) se trouve dans ladite position opérationnelle.
